# FASCICULE DE BREVET EUROPEEN

(11) **EP 3 849 955 B1**
(45) Date de publication et mention de la délivrance du brevet: **23.10.2024**
(21) Numéro de dépôt: 19765277.9
(22) Date de dépôt: 11.09.2019
(51) Int. Cl.: C04B 30/00, C04B 28/18, C04B 28/24, C09K 17/00

(54) **MATÉRIAU DE CONSTRUCTION SANS LIANT HYDRAULIQUE**
BAUMATERIAL OHNE HYDRAULISCHES BINDEMITTEL
BUILDING MATERIAL WITHOUT HYDRAULIC BINDER

(30) Priorité: 12.09.2018 EP 18193997
(43) Date de publication de la demande: 21.07.2021
(73) Titulaire: ETH Zürich, 8092 Zürich (CH)
(72) Inventeur: LANDROU, Gnanli, 8057 Zürich (CH); BRUMAUD, Coralie, 2503 Bienne (CH); HABERT, Guillaume, 8037 Zürich (CH)
(74) Mandataire: Schmitz, Joseph
(86) Numéro de dépôt international: PCT/EP2019/074261
(87) Numéro de publication internationale: WO 2020/053297

(56) Documents cités:
- WO-A1-2015/155110
- WO-A1-93/22254
- US-A- 4 444 594
- ACI COMMITTEE 330: "Guide for Design and Construction of Concrete Parking Lots", 1 January 2001 (2001-01-01), XP055628450, Retrieved from the Internet <URL:http://cdnassets.hw.net/f5/ba/26e60e01418e827a125ac4d41b1a/aci-330-design-guide-for-concrete-parking-lots-tcm77-2204806.pdf> [retrieved on 20191003]

## Description

### DOMAINE TECHNIQUE

La présente invention concerne les matériaux de construction qui peuvent être obtenus à partir le sol dans la mesure ou le sol contient des particules argileuses sans adjonction de liant hydraulique.

### ÉTAT DE LA TECHNIQUE

Dans le domaine de la construction, le matériau de construction inorganique le plus utilisé est le béton, c'est-à-dire des agrégats combinés avec un liant hydraulique. Cependant, l'utilisation de liant hydraulique, comme par exemple le ciment, pose un problème en termes d'infrastructure car la production de ciment nécessite des quantités importantes en énergie ainsi que la présence d'une bétonnerie, ce qui entraîne un coût monétaire et environnemental considérable. Il est donc préférable de réduire l'emploi de tels liant hydrauliques à un minimum pour ainsi réduire le coût de construction. Dans le cas idéal, il est préférable de fournir un matériau de construction qui peut être obtenu avec les ressources naturellement présentes à proximité du site de construction sous l'utilisation d'un minimum de produits auxiliaires. Cependant, il est également important qu'un tel matériau de construction présente un maniabilité similaire au coulis de béton ou ciment ainsi qu'un comportement de prise similaire au coulis de béton afin de ne pas devoir adapter les procédures et/ou les outils de construction qui à la base sont conçus pour des coulis de liant hydraulique tel que le ciment.

WO2015/155110 A1 divulgue un procédé pour la fabrication de carreaux de céramique comprenant des argiles et des sel de cation monovalent tel que des chlorures, bromures ainsi que des dispersants tel que les polymères d'acide (méth)acryliques, les posphates ou les polyphosphates, les di- ou métasilicates de sodium ou du silicate de sodium liquide.

### RÉSUMÉ DE L'INVENTION

La présente invention offre un procédé pour la fabrication d'un matériau de construction solide, préférablement sensiblement libre de liant hydraulique tel que le ciment, qui permet et facilite l'utilisation de sol dans la fabrication du matériau de construction avec un minimum de produits auxiliaires et sans nécessité d'adjoindre des liants hydrauliques.

Le procédé permet en outre d'obtenir un matériau de constructions qui à l'état fluide peut être utilisé de manière analogue à des coulis de ciment, en termes de la rhéologie et temps nécessaire à la prise, ce qui permet par exemple la fabrication de matériaux de construction solides, tel que des éléments porteurs de construction sur place, ou *in situ,* du chantier de construction.

La présente invention offre donc un procédé pour la fabrication d'un matériau de construction solide préférablement sensiblement libre de liant hydraulique, comprenant les étapes de :
a. extraire une fraction minérale comprenant des particules argileuses d'un sol
b. optionnellement ajuster la granulométrie de la fraction minérale extraite, en particulier par rapport à son contenu en argile, sable, gravier ou limon si besoin en est,
c. préparer un premier coulis aqueux à partir d'au moins une partie de la fraction minérale extraite et optionnellement ajustée quant à la granulométrie,
d. ajouter un agent dispersant capable de disperser les particules argileuses au premier coulis pour obtenir un second coulis aqueux,
e. ajouter un agent coagulant capable d'entraîner l'agglomération des particules argileuses au second coulis pour obtenir un coulis de matériau de construction aqueux,
f. introduire le coulis de matériau de construction dans un coffrage, et
g. permettre l'évaporation de l'eau contenue dans le coulis de matériau pour obtenir un matériau de construction solide,
   caractérisé en ce que le matériau de construction solide est un élément porteur ayant une résistance à la compression d'au moins 1.4 MPa,
   dans lequel l'agent dispersant est choisi parmi les phosphates et les sels de polyacrylate tel que les sels monovalents de ceux-ci, et
   dans lequel l'agent coagulant est choisi parmi les sels inorganiques ayant un cation métallique divalent de carbonate, de chlorure, de nitrate, de sulfate, d'oxyde, ou d'hydroxyde, plus préférablement parmi les sels de métaux alcalinoterreux de carbonate, de chlorure, de nitrate, de sulfate, d'oxyde, ou d'hydroxyde.

La présente invention offre en outre un matériau de construction solide obtenu par le procédé selon l'une quelconque des variantes du procédé susmentionné, ayant une résistance à la compression d'au moins 1.4 MPa.

Des réalisations préférées de la présente invention sont décrites dans les revendications dépendantes.

### DESCRIPTION DES DESSINS

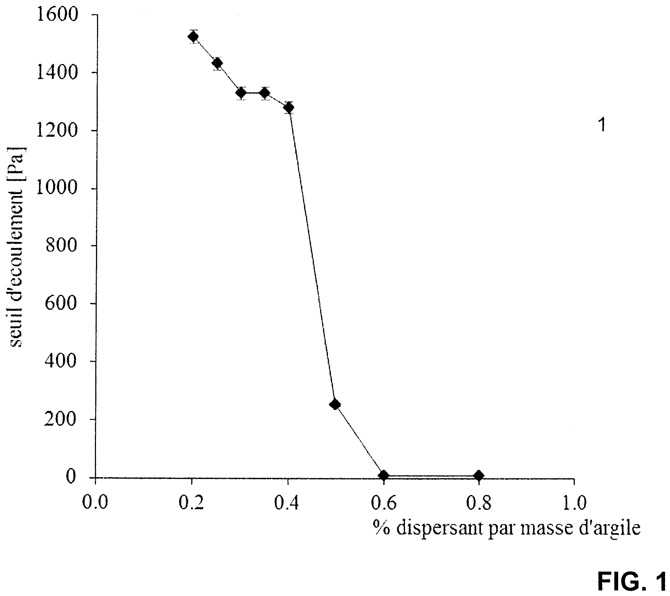

- Fig. 1: montre l'évolution du seuil d'écoulement en fonction du contenu d'agent dispersant dans le coulis

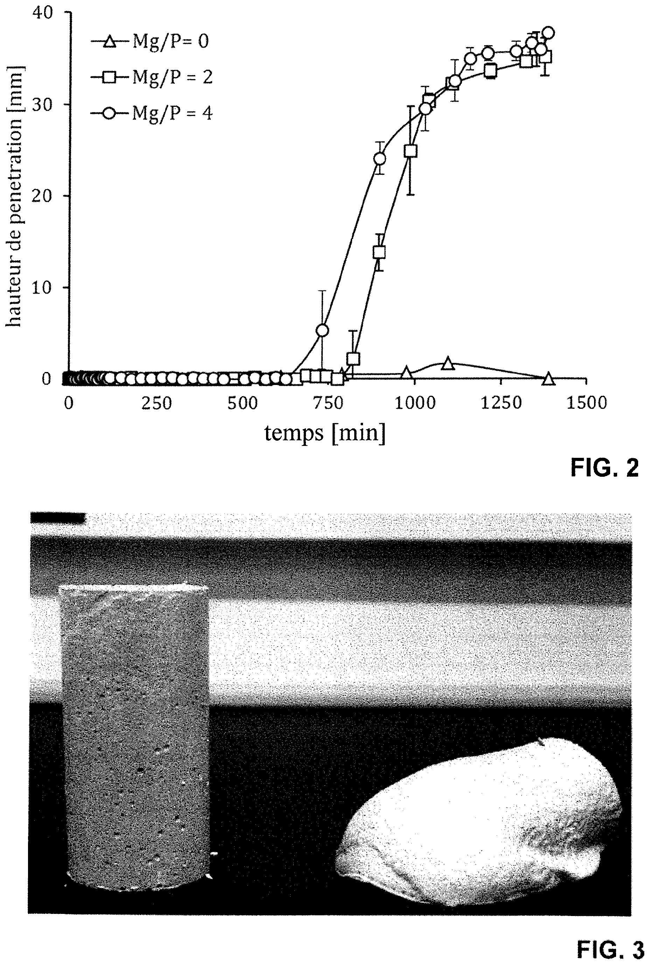

- Fig. 2: montre l'évolution de la hauteur de pénétration de l'aiguille VICAT en fonction du temps
- Fig. 3: montre l'effet de l'agent coagulant à base de magnésium sur le coulis après 24 heures sur un coulis sans magnésium (gauche) et avec magnésium (droite)

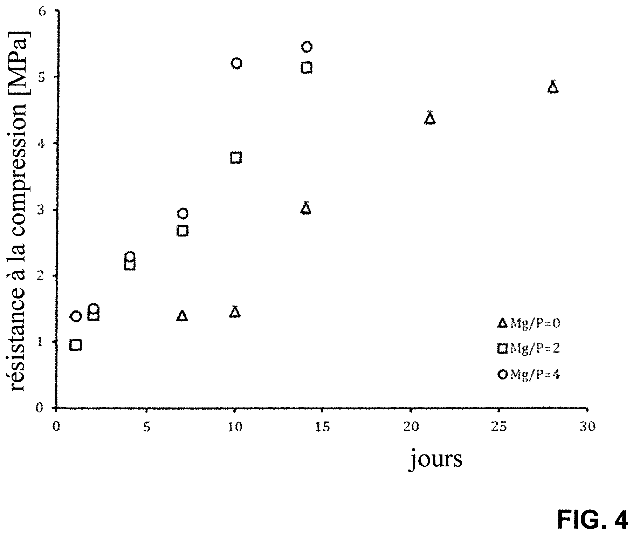

- Fig. 4: montre l'évolution de la résistance à la compression en fonction du temps, c.-à-d. en fonction du degré de séchage

### DESCRIPTION DE RÉALISATIONS PRÉFÉRÉES

La présente invention offre donc un procédé pour la fabrication d'un matériau de construction solide préférablement sensiblement libre de liant hydraulique comme le ciment, la chaux ou la pouzzolane, comprenant les étapes de :
a. extraire une fraction minérale comprenant des particules argileuses d'un sol
b. optionnellement ajuster la granulométrie de la fraction minérale extraite, en particulier par rapport à son contenu en argile, sable, gravier ou limon si besoin en est,
c. préparer un premier coulis aqueux à partir d'au moins une partie de la fraction minérale extraite et optionnellement ajustée quant à la granulométrie,
d. ajouter un agent dispersant capable de disperser les particules argileuses au premier coulis pour obtenir un second coulis aqueux,
e. ajouter un agent coagulant capable d'entraîner l'agglomération des particules argileuses au second coulis pour obtenir un coulis de matériau de construction aqueux,
f. introduire le coulis de matériau de construction dans un coffrage, et
g. permettre l'évaporation de l'eau contenue dans le coulis de matériau pour obtenir un matériau de construction solide,

caractérisé en ce que le matériau de construction solide est un élément porteur ayant une résistance à la compression d'au moins 1.4 MPa,
dans lequel l'agent dispersant est choisi parmi les phosphates et les sels de polyacrylate tel que les sels monovalents de ceux-ci, et
dans lequel l'agent coagulant est choisi parmi les sels inorganiques ayant un cation métallique divalent de carbonate, de chlorure, de nitrate, de sulfate, d'oxyde, ou d'hydroxyde, plus préférablement parmi les sels de métaux alcalinoterreux de carbonate, de chlorure, de nitrate, de sulfate, d'oxyde, ou d'hydroxyde.

L'extraction de la fraction minérale comprenant des particules argileuses de sol peut être effectuée sur place, par exemple au moyen d'excavation du sol, ce qui évite la nécessité de transporter des matériaux minéraux tel que des argiles, limons, gravats, sables supplémentaires vers le lieu de construction ou de production. Les particules argileuses sont préférablement des particules ayant une taille inférieure à 4 µm, plus préférablement à 2 µm selon la norme NF P18-560. Les particules argileuses sont préférablement des particules d'aluminosilicates hydratés, plus préférablement issus de la famille des phyllosilicates, tel que la kaolinite. Les technologies nécessaires à l'obtention d'une fraction minérale sont à la portée de l'homme du métier dans le domaine des matériaux de construction.

L'ajustement de la granulométrie de la fraction minérale extraite peut être effectué sur place au moyen de tamisage ou de sédimentométrie de la fraction minérale extraite ou lorsque la granulométrie de la fraction minérale extraite locale l'exige, il est possible de compléter la composition de la fraction minérale par adjonction de fractions minérales supplémentaires pour arriver à la granulométrie désirée, tel que le limon, le sable, graviers ou cailloux. Le contenu de la fraction minérale en termes de limon, sables gravier ou cailloux dépendra des exigences du matériau de construction et de son utilisation envisagée.

Une composition utile de la fraction minérale présente environ 5 à 30 % en poids de particules argileuses, préférablement 10 à 25 % en poids de particules argileuses, 5 à 10 % en poids de limon, 25 à 55% en poids de sable et 20 à 47% en poids de graviers, par rapport au poids total de matériau minéral sec contenu dans la fraction minérale.

La préparation du premier coulis aqueux à partir d'au moins une partie de la fraction minérale extraite, qui a optionnellement été ajustée quant à la granulométrie, peut être effectuée en mélangeant au moins une partie de la fraction minérale extraite à une solution aqueuse ou de l'eau, par exemple dans une bétonneuse. La quantité d'eau peut être variée selon l'utilisation envisagée et est en général choisie de sorte que le coulis est fluide. Par exemple un rapport eau/fraction minérale entre 0.1 et 0.6. Ou un rapport eau/fraction minérale de sorte qu'une fluidité en termes d'étalement après vibration entre 30 et 50cm est atteinte.

L'ajout d'un agent dispersant capable de disperser les particules argileuses au premier coulis pour obtenir un second coulis aqueux, est préférablement effectué lorsque le premier coulis aqueux a été mélangé tout en continuant l'action de mélange. L'ajout pourra se faire ou bien en ajoutant l'agent dispersant à l'état solide ou sous forme de dispersion ou solution aqueuse. L'agent dispersant capable de disperser les particules argileuses est préférablement choisi parmi les aluminates, phosphates, les solutions de silicate et les sels de polyacrylate tel que les sels monovalents de ceux-ci. Un agent dispersant utile choisi parmi les phosphates est le hexamétaphosphate de sodium. Un agent dispersant utile choisi parmi les silicates est la solution de silicate de sodium. Un agent dispersant utile choisi parmi les sels de polyacrylate est le polyacrylate de sodium. Il est important de choisir l'agent dispersant parmi les sels monovalents, de préférence parmi les sels de métaux alcalins tel que le sodium ou le potassium et non de métaux alcalino-terreux qui sont à divalents. L'addition de l'agent dispersant au premier coulis permet d'obtenir un coulis ayant une fluidité accrue, c.-à-d. un seuil d'écoulement de moins de 1000 Pa, préférablement de moins de 250 Pa. Il est sous-entendu que cela permet une diminution de l'ajout d'eau nécessaire pour aboutir à un seuil d'écoulement fixe du coulis en comparaison à un coulis ne comprenant pas d'agent dispersant. Lorsque le seuil d'écoulement est inférieur à 1000 Pa, le coulis devient plus facile à travailler, mouler, coffrer et pomper. Le seuil d'écoulement inférieur à 1000 Pa peut être atteint par l'ajout de moins de 2 % en poids, préférablement de 0.1 à 0.5% en poids d'agent dispersant par rapport au poids total sec de matériau minéral ou de 0.4 à 2% en poids d'agent dispersant par rapport au poids total d'argiles sec. En particulier, l'agent dispersant peut être choisi parmi le polyphosphate de sodium, le hexamétaphosphate de sodium, le silicate de sodium, le polyacrylate de sodium et le polyacrylate d'ammonium. Dans un mode de réalisation préféré de la présente invention, l'agent dispersant est constitué par un mélange d'au moins un phosphate et d'au moins un silicate, plus préférablement d'un mélange de hexamétaphosphate de sodium et de silicate de sodium.

L'ajout d'un agent coagulant capable d'entraîner l'agglomération des particules argileuses au second coulis pour obtenir un coulis de matériau de construction aqueux , est préférablement effectué lorsque le second coulis aqueux a atteint un seuil d'écoulement de moins de 1000 Pa et plus préférablement lorsque le second coulis aqueux a atteint un seuil d'écoulement de moins de 1000 Pa et avant le coffrage du coulis de matériau de construction aqueux.

L'ajout de l'agent coagulant permet d'accélérer la prise du coulis de matériau de construction aqueux en libérant des ions divalents, tel que le calcium, qui ont la capacité de former des précipitations tel que des cristaux qui peuvent augmenter les propriétés mécaniques tel que la résistance à la compression dans le matériau de construction final. La solubilité de l'agent coagulant peut être exploitée pour contrôler la vitesse de prise du coulis de matériau de construction afin d'optimiser le déroulement de l'autre de construction. Lorsqu'une prise rapide, c.-à-d. dans uns délai de moins d'une heure est souhaitée, l'agent coagulant est préférablement choisi parmi les halogénures et les nitrates, telles que les chlorures, de métaux alcalino-terreux comme par exemple le chlorure de magnésium ou de calcium ou encore le nitrate de calcium ou le nitrate de magnésium. Cependant, lorsqu'une ouvrabilité prolongée, c.-à-d. au-delà d'une heure et préférablement de plus de 4 heures est souhaitée, l'agent coagulant est préférablement choisi parmi les oxydes, hydroxydes et carbonates, et sulfates de métaux alcalino-terreux comme par exemple l'oxyde de magnésium ou de calcium, l'hydroxyde de magnésium ou de calcium, carbonate de magnésium ou de calcium.

Par exemple, dans le cas où le l'agent dispersant est choisi parmi les silicates comme silicate de sodium et l'agent coagulant est choisi parmi les sels de métaux alcalino-terreux tel que l'oxyde de calcium, les précipitations se manifestent en cristaux de silicate de calcium hydraté tel que la plomberite. Dans le cas ou dans le cas où le l'agent dispersant est choisi parmi les phosphates comme le hexamétaphosphate et l'agent coagulant est choisi parmi les sels de métaux alcalino-terreux tel que l'oxyde de calcium, les précipitations se manifestent en cristaux de silicate de calcium hydraté tel que l'apatite. Similairement, lorsque l'agent dispersant est choisi parmi les phosphates comme le hexamétaphosphate et l'agent coagulant est choisi parmi les sels de métaux alcalino-terreux tel que l'oxyde de magnésium, les précipitations se manifestent en cristaux de silicate de magnésium. Sans vouloir préférer une théorie singulière, il est estimé que la montée rapide en résistance à la compression qui s'effectue dans les coulis de matériau de construction aqueux peu après l'adjonction de l'agent coagulant et pendant le séchage dérive de cette formation de précipitations qui consomme l'agent dispersant présent dans le coulis de matériau de construction aqueux et élimine la répulsion électrostatique engendrée par adsorption de l'agent dispersant sur les particules argileuses. La montée rapide en résistance à la compression qui s'effectue dans les coulis de matériau de construction aqueux peu après l'adjonction de l'agent coagulant et pendant le séchage permet d'écourter le temps nécessaire pour fabriquer un élément de matériau de construction.

De manière générale l'agent coagulant est préférablement choisi parmi les sels inorganiques ayant un cation métallique divalent comme par exemple le fer ou les métaux alkalinoterreux, de carbonate, de chlorure, de nitrate, de sulfate, d'oxyde, ou d'hydroxyde, plus préférablement de sels de métaux alcalinoterreux , tel que le calcium ou le magnésium, de carbonate, de chlorure, de nitrate, de sulfate, d'oxyde, ou d'hydroxyde. En particulier, l'agent coagulant peut être choisi parmi le carbonate de calcium, le chlorure de calcium, nitrate de calcium, sulfate de calcium, hydroxyde de calcium, oxyde de magnésium, hydroxyde de magnésium, carbonate de mangnésium, sulfate de magnésium, le ciment ou le ciment à base de sulfo-aluminate de calcium.

Dans un mode de réalisation préféré de la présente invention, l'agent dispersant est constitué par au moins un phosphate, au moins un silicate, ou de mélanges de ceux-ci, plus préférablement de hexamétaphosphate de sodium, de silicate de sodium ou d'un mélange de hexamétaphosphate de sodium et de silicate de sodium et/ou l'agent coagulant est constitué d'oxyde de magnésium, d'hydroxyde de calcium ou d'un mélange d'oxyde de magnésium et d'hydroxyde de calcium.

L'ajout de l'agent coagulant pourra se faire ou bien en ajoutant l'agent coagulant à l'état solide ou sous forme de dispersion ou solution aqueuse, et lorsqu'une prise rapide, c.-à-d. dans un délai de moins d'une heure est souhaitée, l'agent coagulant est ajouté sous forme de solution aqueuse dans le cas où il s'agit de halogénures ou dans le cas où l'agent coagulant est préférablement choisi parmi les oxydes, hydroxydes et carbonates, et sulfates sous forme de particules solides ayant une surface spécifique d'au moins 20 m²/g ou bien sous forme de dispersion aqueuse des mêmes particules solides.

De manière générale, l'agent coagulant pourra être issu de l'extraction de minerai correspondant dans une carrière. Bien que les minerais contiennent une majorité de l'agent coagulant, ces minerais contiennent également des impuretés qui peuvent interférer avec l'action coagulante et il est donc préférable d'utiliser des agents coagulants ayant une pureté augmentée, c.-à-d. ayant une pureté d'au moins 85% en poids, plus préférablement de 95% en poids ou plus. Il s'est avéré que l'utilisation d'agents coagulants ayant une pureté augmentée mène également à des propriétés mécaniques plus élevées dans le matériau de construction durci ainsi qu'à une accélération de la prise. En revanche, l'utilisation d'agents coagulants ayant une pureté réduite, c.-à-d. ayant une pureté de moins de 85% en poids mène à une prolongation du temps pendant lequel le coulis reste ouvrable.

Dans une réalisation particulière du procédé selon la présente invention, l'agent coagulant dans le matériau de construction est présent dans au moins 0.1 % en poids, préférablement de 0.1 à 0.5 % en poids, par rapport au poids total de matériau minéral sec ou au moins 1 % en poids, préférablement de 1% à 2% en poids, par rapport au contenu d'argiles sec.

Dans une réalisation particulière du procédé selon la présente invention où l'agent dispersant est choisi parmi les phosphates et l'agent coagulant est choisi parmi les sels inorganiques ayant un cation métallique divalent, le rapport molaire [Me²⁺/PO₄³⁻] entre le cation métallique du sel inorganique et le phosphate dans le coulis de matériau de construction aqueux est préférablement supérieur à 1 et plus préférablement supérieur à 2 ou entre 2 et 5, c.à.-d que de manière générale le cation métallique du sel inorganique est présent dans un excès molaire par rapport au phosphate.

Dans un mode de réalisation préféré de la présente invention, où l'agent dispersant est constitué d'au moins d'une solution aqueuse de silicate tel que par exemple le silicate de sodium, c.-à-d. de silicate de soude, le silicate de sodium est présent dans un rapport de Na₂O:SiO₂ supérieur à 1, plus préférablement dans la plage entre 1 et 2.8. En particulier dans le cas où le silicate de sodium ayant un rapport de Na₂O:SiO₂ supérieur à 1, plus préférablement dans la plage entre 1 et 2.8 est utilisé en tant qu'agent coagulant, l'agent dispersant est préférablement un polyacrylate et plus préférablement choisi parmi le polyacrylate de sodium, le polyacrylate d'ammonium, ou parmi les mélanges de ceux-ci.

Dans une réalisation particulière du procédé selon la présente invention, le matériau de construction est un bloc de construction, préférablement en forme de parallélépipède tel que des briques, en particulier des briques porteuses ou d'autres éléments porteurs tel qu'un mur, une dalle ou un pilier.

La présente invention offre en outre un matériau de construction solide obtenu par le procédé selon l'une quelconque des variantes du procédé susmentionné, ayant une résistance à la compression d'au moins 1.4 MPa, et plus particulièrement d'au moins 3 MPa ou de 3 à 10 MPa et sensiblement libre de liant hydraulique. Une résistance à la compression dans cette plage permet de fabriquer des blocs de construction ou des murs verticaux propices à la construction de maisons ou d'immeubles ayant jusqu'à quatre étages sans devoir recourir à des matériaux tel que les liants hydrauliques et en utilisant une quantité faible d'additifs tel que l'agent dispersant et l'agent coagulant. Il est important de mentionner qu'une résistance à la compression d'au moins 1.4 MPa peut être obtenue après 24 heures de séchage, ce qui permet un progrès de construction avec sensiblement le même pas que dans le cas où la matériau de construction utilisé est le ciment ou le béton. La résistance à la compression est mesurée en utilisant un appareil Unitronic Compression 50kN / tensile 25 kN fabriqué par Matest sur des échantillons de 4×4×16 cm qui sont cassés en 3 points de flexion puis testés en compression uni-axialement en utilisant une cellule de 10kN.

Ainsi, le matériau de construction obtenu est sensiblement libre de liant hydraulique comme le ciment, la chaux ou la pouzzolane, c'est-à-dire comprend moins de 2% en poids, moins de 1% en poids de liant hydraulique tel que le ciment, la chaux ou la pouzzolane, par rapport au poids total de matériau minéral sec contenu dans la fraction minérale. Dans une réalisation préférée, le matériau de construction obtenu comprend moins de 1% en poids de ciment par rapport au poids total de matériau minéral sec contenu dans la fraction minérale.

Dans une réalisation particulière du procédé selon la présente invention, l'ajout de l'agent dispersant et de l'agent coagulant pour finalement obtenir un coulis de matériau de construction aqueux peut se fait en ajoutant d'abord l'agent dispersant et de l'agent coagulant.

Dans le cas où l'ajout de l'agent dispersant et de l'agent coagulant se fait de manière séquentielle, c.-à-d. d'abord de l'agent dispersant et puis de l'agent coagulant, il est préférable d'ajouter l'agent dispersant, l'agent coagulant ou bien les deux sous forme de solution ou dispersion aqueuse afin de mieux contrôler temporellement la durée de l'ouvrabilité ou le déclenchement de la prise du coulis de matériau de construction.

### EXAMPLES

1325 kg de sable, 509.33 kg d'argile et 305.59 kg d'eau ont été mélangés pour obtenir 1 m³ de coulis dans lequel le rapport eau/argile est de 0.6 et le rapport volumique sable/argile est d'environ 1.0.

La quantité d'additifs ajoutés a été variée pour évaluer l'effet du dispersant et du coagulant sur la rhéologie et la prise du coulis. Dans le cas discuté, le dispersant utilisé est l'hexamétaphosphate de sodium (NaHMP).

Comme on peut le constater sur le graphe du dessin 1, l'augmentation de la quantité de dispersant ajouté au coulis entraine une diminution du seuil d'écoulement du coulis, ce qui a été également confirmé par une augmentation de l'étalement de 10 cm (0.2% en poids d'NaHMP par rapport au poids d'argiles) à 40cm (0.8% en poids d'NaHMP par rapport au poids d'argiles) dans un essai d'affaissement au cône d'Abrams.

Comme on peut le constater sur le graphe du dessin 2, l'augmentation de la quantité de coagulant ajouté au coulis fluidisé avec 0.8 % en poids de dispersant, par rapport au poids d'argiles, entraine une accélération de la prise du coulis. Il est utile de noter que dans le dessin 2, une hauteur de pénétration de 0 correspond à la pénétration maximale dans le sens où l'aiguille VICAT pénètre jusqu'au fond de l'échantillon, c.-à-d. jusqu'à la hauteur 0 de l'échantillon. Dans le cas présent, le coagulant utilisé est l'oxyde de magnésium. Sans ajout d'oxyde de magnésium (rapport molaire Mg/P=0), aucune solidification se produit. En contrepartie, si on ajoute du coagulant à base d'oxyde de magnésium, la prise est déclenchée et accélérée à mesure où le rapport molaire entre le magnésium et le phosphate augmente.

Comme on peut le constater sur la photographie du dessin 3, sans ajout de coagulant à base d'oxyde magnésium, un échantillon de coulis fluidisé avec 0.8 % en poids de dispersant démoulé s'écroule même après 24 heures, alors qu'en présence de coagulant à base d'oxyde magnésium, l'échantillon tient en place.

Comme on peut le constater sur le graphe du dessin 4, la résistance à la compression de 1MPa, suffisante pour démouler un mur autoporteur, est atteinte au bout de 24 heures ou 48 heures lorsque le coulis fluidisé avec 0.8 % en poids de dispersant comporte un coagulant à base d'oxyde magnésium, tandis que sans ajout de coagulant à base d'oxyde magnésium le coulis nécessite au moins une semaine pour atteindre une résistance à la compression de 1 MPa. En pratique, cela veut dire que les coulis obtenus par le procédé selon la présente invention peuvent être démoulés après 24 heures, ce qui correspond approximativement au temps nécessaire pour démouler un coulis de ciment conventionnel. Ceci permet donc de substituer les coulis de ciment conventionnels sans perte de temps pendant l'ouvrage.

En conclusion, l'ajout de coagulant entraine une montée en résistance à la compression qui permet de construire des murs verticaux autoporteurs rapidement car on atteint une résistance suffisante au bout de 24 heures afin de démouler un mur auto-porteur.

## Revendications

1. Un procédé pour la fabrication d'un matériau de construction solide sensiblement libre de liant hydraulique, comprenant les étapes de :
a. extraire une fraction minérale comprenant des particules argileuses d'un sol
b. optionnellement ajuster la granulométrie de la fraction minérale extraite, en particulier par rapport à son contenu en argile, sable, gravier ou limon,
c. préparer un premier coulis aqueux à partir d'au moins une partie de la fraction minérale extraite et optionnellement ajustée quant à la granulométrie,
d. ajouter un agent dispersant dispersant les particules argileuses au premier coulis aqueux pour obtenir un second coulis aqueux,
e. ajouter un agent coagulant entraînant l'agglomération des particules argileuses au second coulis aqueux pour obtenir un coulis de matériau de construction aqueux,
f. introduire le coulis de matériau de construction aqueux dans un coffrage, et
g. permettre l'évaporation de l'eau contenue dans le coulis de matériau pour obtenir un matériau de construction solide,
**caractérisé en ce que** le matériau de construction solide est un élément porteur ayant une résistance à la compression d'au moins 1.4 MPa,
dans lequel l'agent dispersant est choisi parmi les phosphates et les sels de polyacrylate tel que les sels monovalents de ceux-ci, et
dans lequel l'agent coagulant est choisi parmi les sels inorganiques ayant un cation métallique divalent de carbonate, de chlorure, de nitrate, de sulfate, d'oxyde, ou d'hydroxyde, plus préférablement parmi les sels de métaux alcalinoterreux de carbonate, de chlorure, de nitrate, de sulfate, d'oxyde, ou d'hydroxyde.

2. Le procédé selon la revendication 1, dans lequel l'élément porteur est un mur, une brique, une dalle ou un pilier.

3. Le procédé selon l'une quelconque des revendications 1 à 2, dans lequel le matériau de construction comprend au moins 5 % en poids, préférablement de 5 à 30% en poids de particules argileuses, par rapport au poids total sec de matériau minéral contenu dans la fraction minérale.

4. Le procédé selon l'une quelconque des revendications 1 à 3, dans lequel le matériau de construction comprend 0.4 à 2% en poids d'agent dispersant, par rapport au poids total sec d'argiles.

5. Le procédé selon l'une quelconque des revendications 1 à 4, dans lequel le matériau de construction comprend au moins 1 % en poids d'agent coagulant, préférablement de 1% à 2% en poids, par rapport au poids total sec d'argiles.

6. Le procédé selon l'une quelconque des revendications 1 à 5, dans lequel le coulis de matériau de construction, au moment de l'introduction dans le moule, contient de 5 à 30% d'eau.

7. Le procédé selon l'une quelconque des revendications 1 à 6, dans lequel lorsque l'agent dispersant est choisi parmi les phosphates et l'agent coagulant est choisi parmi les sels de métaux alcalinoterreux, le rapport molaire [Me²⁺/PO₄³⁻] entre le cation métallique du sel et le phosphate dans le coulis de matériau de construction aqueux est supérieur à 1 et préférablement entre 2 et 5.

8. Un matériau de construction solide obtenu par le procédé selon l'une quelconque des revendications précédentes, **caractérisé en ce que** le matériau de construction solide est un élément porteur ayant une résistance à la compression d'au moins 1.4 MPa.

## Patentansprüche

1. Verfahren zur Herstellung eines festen Baumaterials, welches im Wesentlichen frei von hydraulischem Bindemittel ist, umfassend die Schritte:
a. extrahieren einer mineralischen Fraktion bestehend aus Tonpartikeln aus einem Boden
b. optionales Anpassen der Partikelgröße der extrahierten mineralischen Fraktion, insbesondere im Verhältnis zu deren Ton-, Sand-, Kies- oder Schluffanteil,
c. Zubereiten einer ersten wässrigen Aufschlämmung aus zumindest einem Teil der extrahierten und gegebenenfalls hinsichtlich der Partikelgröße angepassten mineralischen Fraktion,
d. Hinzufügen eines Dispergiermittels, das die Tonpartikel dispergieren kann, zur ersten wässrigen Aufschlämmung, um eine zweite wässrige Aufschlämmung zu erhalten,
e. Hinzufügen eines Koagulierungsmittels, das die Tonpartikel agglomerieren lässt, zur zweiten wässrigen Aufschlämmung, um eine wässrige Baumaterialaufschlämmung zu erhalten,
f. Einbringen der wässrigen Baumaterialaufschlämmung in eine Schalung, und
g. das in der Baumaterialaufschlämmung enthaltene Wasser verdunsten lassen, um ein festes Baumaterial zu erhalten,
**dadurch gekennzeichnet, dass** das feste Baumaterial ein tragendes Element mit einer Druckfestigkeit von mindestens 1,4 MPa ist,
wobei das Dispergiermittel aus Phosphaten und Polyacrylatsalzen, beispielsweise deren einwertigen Salzen, ausgewählt wird, und
wobei das Koagulierungsmittel aus anorganischen Salzen mit einem zweiwertigen Metallkation von Carbonat, Chlorid, Nitrat, Sulfat, Oxid oder Hydroxid, bevorzugter aus Erdalkalimetallsalzen von Carbonat, Chlorid, Nitrat, Sulfat, Oxid oder Hydroxid, ausgewählt wird.

2. Verfahren nach Anspruch 1, wobei das tragende Element eine Wand, ein Ziegelstein, eine Platte oder ein Pfeiler ist.

3. Verfahren nach irgendeinem der Ansprüche 1 bis 2, wobei das Baumaterial mindestens 5 Gew.-%, vorzugsweise 5 bis 30 Gew.-% Tonpartikel, bezogen auf das Gesamttrockengewicht des in der mineralischen Fraktion enthaltenen mineralischen Materials, umfasst.

4. Verfahren nach irgendeinem der Ansprüche 1 bis 3, wobei das Baumaterial 0,4 bis 2 Gew.-% Dispergiermittel, bezogen auf das Gesamttrockengewicht der Tone, umfasst.

5. Verfahren nach irgendeinem der Ansprüche 1 bis 4, bei dem das Baumaterial mindestens 1 Gew.-% Koagulierungsmittel, vorzugsweise 1 bis 2 Gew.-%, bezogen auf das Gesamttrockengewicht der Tone, umfasst.

6. Verfahren nach irgendeinem der Ansprüche 1 bis 5, wobei die Baumaterialaufschlämmung zum Zeitpunkt des Einbringens in die Schalung 5 bis 30 % Wasser enthält.

7. Verfahren nach irgendeinem der Ansprüche 1 bis 6, wobei wenn das Dispergiermittel aus Phosphaten und das Koagulierungsmittel aus Salzen von Erdalkalimetallen ausgewählt wird, das Molverhältnis [Me²⁺/PO₄³⁻] zwischen dem Metallkation des Salzes und dem Phosphat in der wässrigen Baumaterialaufschlämmung bei größer als 1 und vorzugsweise zwischen 2 und 5 liegt.

8. Festes Baumaterial, erhalten durch das Verfahren nach irgendeinem der vorangehenden Ansprüche, **dadurch gekennzeichnet, dass** das feste Baumaterial ein tragendes Element mit einer Druckfestigkeit von mindestens 1,4 MPa ist.

## Claims

1. A process for the manufacture of a solid building material substantially free of hydraulic binder, comprising the steps of:
a. extracting a mineral fraction comprising clay particles from a soil,
b. optionally adjusting the particle size of the extracted mineral fraction, in particular with respect to its clay, sand, gravel or silt content,
c. preparing a first aqueous slurry from at least a part of the extracted mineral fraction and optionally adjusted as to the particle size,
d. adding a dispersing agent capable of dispersing the clay particles to the first aqueous slurry to obtain a second aqueous slurry,
e. adding a coagulating agent capable of causing the clay particles to agglomerate to the second aqueous slurry to obtain an aqueous building material slurry,
f. introducing the aqueous building material slurry into a formwork, and
g. allowing the water contained in the material slurry to evaporate to obtain a solid building material,
**characterized in that** the solid building material is a load-bearing element having a compressive strength of at least 1.4 MPa,
wherein when the dispersing agent is selected from phosphates and polyacrylate salts such as monovalent salts thereof, and
the coagulating agent is selected from inorganic salts having a divalent metal cation of carbonate, chloride, nitrate, sulfate, oxide, or hydroxide, more preferably from alkaline earth metal salts of carbonate, chloride, nitrate, sulfate, oxide, or hydroxide.

2. The process according to claim 1, wherein load-bearing element is a wall, a brick, a slab or a pillar.

3. The process according to any one of claims 1 to 2, wherein the building material comprises at least 5% by weight, preferably from 5 to 30% by weight of clay particles, relative to the total dry weight of the mineral material contained in the mineral fraction.

4. The process of any one of claims 1 to 3, wherein the building material comprises 0.4 to 2% by weight of dispersing agent, relative to the total dry weight of clays.

5. The process according to any one of claims 1 to 4, wherein the building material comprises at least 1% by weight of coagulating agent, preferably from 1% to 2% by weight, relative to the total dry weight of clays.

6. The process of any one of claims 1 to 5, wherein the slurry of building material, at the time of introduction into the mold, contains from 5 to 30% water.

7. The process according to any one of claims 1 to 6, wherein when the dispersing agent is selected from phosphates and the coagulating agent is selected from alkaline earth metal salts, wherein the molar ratio [Me²⁺/PO₄³⁻] between the metal cation of the salt and the phosphate in the aqueous building material slurry is greater than 1 and preferably between 2 and 5.

8. A solid building material obtained by the process according to any to any one of the preceding claims, **characterized in that** the solid building material is a load-bearing element having a compressive strength of at least 1.4 MPa.
